# EUROPÄISCHE PATENTSCHRIFT

(11) **EP 1 890 938 B1**
(45) Veröffentlichungstag und Bekanntmachung des Hinweises auf die Patenterteilung: **02.09.2009**
(21) Anmeldenummer: 06829333.1
(22) Anmeldetag: 06.12.2006
(51) Int. Cl.: B65B 1/18, B65B 51/22

(54) **VERFAHREN UND VORRICHTUNG ZUM FÜLLEN VON SÄCKEN**
METHOD OF, AND APPARATUS FOR, FILLING BAGS
PROCEDE ET DISPOSITIF POUR REMPLIR DES SACS

(30) Priorität: 08.12.2005 DE 102005059004
(43) Veröffentlichungstag der Anmeldung: 27.02.2008
(73) Patentinhaber: Haver & Boecker oHG, 59302 Oelde (DE)
(72) Erfinder: BRORMANN, Hubert, 59302 Oelde (DE); NEUMANN, Robert, 75334 Staubenhardt (DE)
(74) Vertreter: Schütte, Hartmut
(86) Internationale Anmeldenummer: PCT/EP2006/011699
(87) Internationale Veröffentlichungsnummer: WO 2007/065647

(56) Entgegenhaltungen:
- WO-A-96/01208
- DE-U1- 20 206 429
- DE-U1- 20 305 725

## Beschreibung

Die Erfindung betrifft ein Verfahren und eine Vorrichtung zum Füllen von Säcken, insbesondere von Ventilsäcken. Mit der Erfindung können aber auch andere Säcke als Ventilsäcke befüllt werden. Die Erfindung wird im folgenden beispielhaft mit Bezug auf das Füllen von Ventilsäcken beschrieben.

Es sind im Stand der Technik unterschiedliche Füllmaschinen bekannt geworden. Beispielsweise sind Füllmaschinen bekannt geworden, die mit einem oder mit mehreren Füllorganen in Form von z.B. Füllrohren ausgestattet sind, auf die die zu füllenden Ventilsäcke aufsteckbar sind und die mit Verschließeinrichtungen ausgestattet sind, die nach dem Ultraschallschweißverfahren arbeiten. Jede Ultraschallschweißeinrichtung umfasst insbesondere jeweils einen Amboss und eine Sonotrode.

Solche Füllmaschinen können z.B. als sogenannte rotierende Füllmaschinen ausgebildet sein, bei denen die einzelnen Füllaggregate um eine gemeinsame vertikale Achse rotieren. Die Füllmaschinen können auch als stationäre Füllmaschinen ausgebildet sein, bei denen mehrere Füllmaschinen auch in einer Reihe angeordnet werden können. Derartige Maschinen werden als Reihenpackmaschinen bezeichnet. Damit nach dem Füllen kein Füllgut durch das Ventil hindurch nach außen gelangt, werden mit den Verschließeinrichtungen die Ventile staubdicht verschlossen. Danach werden die Säcke auf einen Abförderer geworfen. Eine solche Füllmaschinen ist z.B. mit der DE 202 06 429 U1 bekannt geworden.

Ein Nachteil bei den im Stand der Technik bekannten Füllmaschinen ist, dass das die Sonotrode umfassende Schwinggebilde der Verschließeinrichtungen einem Verschleiß unterliegt, der aber nicht unbedingt linear mit der Zeit oder der Anzahl der erfolgten Verschweißungen korreliert.

Beim Übertreten der Belastbarkeitsgrenze kann das Sonotrodenmaterial lokal aufreißen. Dadurch wird das Schwingungsverhalten der Sonotrode insgesamt, insbesondere aber in der Gegend der Rissstelle negativ beeinflusst. An solchen Stellen wird deshalb unter Umständen nur eine geschwächte (oder lokal gar keine) Schweißnaht an dem zu verschließenden Sack erzeugt, die leicht wieder aufbricht und zu kompletten Sackabbruch führen kann. Auch ist es unerwünscht, wenn durch ein an der Schweißnaht entstehendes Loch ein Teil des Füllmaterials wieder austritt und zur Verschmutzung z.B. des Lager- oder Verkaufsraums führt.

Es ist deshalb die Aufgabe der Erfindung, eine zuverlässigere Verfahrensweise und eine zuverlässigere Vorrichtung zur Verfügung zu stellen.

Diese Aufgabe wird gelöst durch ein Verfahren mit den Merkmalen des Anspruchs 1 und durch eine Vorrichtung mit den Merkmalen des Anspruchs 13. Bevorzugte Weiterbildungen sind Gegenstand der Unteransprüche.

Das erfindungsgemäße Verfahren nach Anspruch 1 dient zum Füllen von Säcken, wobei nacheinander Säcke mit einem Füllmaterial gefüllt und anschließend mittels eines Schwinggebildes einer Ultraschallschweißeinrichtung verschlossen werden, wobei ein Kennwert für das Schwingungsverhalten des Schwinggebildes im Leerlauf zwischen dem Verschließen zweier Säcke ermittelt wird.

Die Erfindung bietet erhebliche Vorteile. Es werden fehlerhafte Schweißnähte weitgehend vermieden, da das Schwingungsverhalten des Schwinggebildes im Leerlauf zwischen dem Verschließen zweier Säcke überprüft wird. Dadurch können Änderungen des Schwingungsverhaltens.frühzeitig erkannt und daraus auf eine Strukturänderung des Schwinggebildes und insbesondere der Sonotrode zurückgeschlossen werden. Wenn sich bei der Sonotrode das Gefüge lokal ändert, verändert sich deren Resonanzverhalten. Damit verändert sich das Schwingungsverhalten der Sonotrode und des Schwinggebildes insgesamt. Die Änderung des Schwingungsverhalten kann messtechnisch erfasst werden. Beim Erfassen solcher Veränderungen kann ein Alarmsignal ausgegeben werden oder das weitere Füllen und Verschweißen von Säcken gestoppt werden, bis das veränderte oder fehlerhafte Bauteil ausgetauscht ist.

Unter Verschließen wird mit Bezug auf das Verschließen von Säcken hier das Verschweißen verstanden.

Ein erheblich Vorteil ist, dass bei der Überprüfung des Schwingungsverhaltens des Schwinggebildes im Leerlauf äußere Einflüsse weitgehend vermieden werden, so dass eine reproduzierbare Beurteilung des Schwingverhaltens möglich ist. Weder der zu befüllende Sack noch eventuell abliegendes Material auf dem Amboss oder der Sonotrode beeinflussen das Schwingungsverhalten des Schwinggebildes wesentlich. Beim Verschließen eines Sacks kann hingegen dazwischen liegendes Material das Schwingungsverhalten beeinflussen, wenn z.B. Füllmaterial zwischen Sonotrode und Amboss vorhanden sind. Deshalb stellt das Schwingungsverhalten beim Verschweißen selbst kein eindeutiges Kriterium für den Zustand des Schwinggebildes dar.

Die erfindungsgemäße Überprüfung des Schwingungsverhaltens des Schwinggebildes im Leerlauf zwischen dem Verschließen zweier Säcke gibt wertvolle Hinweise auf mögliche negative Veränderungen der Sonotrode. Es wird der frühzeitige Austausch ermöglicht, so dass das Auftreten von Schäden verhindert werden kann. Wenn sich bei einem Schwinggebilde Strukturveränderungen ergeben und sich das Schwinggebilde in einem Zustand befindet, indem mit der Erfindung schon erste Veränderungen feststellbar sind, dann können mit solch einer Sonotrode in der Regel noch einige oder sogar etliche Säcke verschweißt werden, ohne dass sich negative Auswirkungen bemerkbar machen. Allerdings wird bei Weiterverwendung das Schwingverhalten des Schwinggebildes kontinuierlich schlechter, bis die Schädigungen so groß sind, dass eine ungenügende Schweißnaht hergestellt wird oder sonstige Schäden auftreten.

Damit die Umgebung der Füllmaschine sowie die Ventilsäcke selbst nicht verschmutzt werden, wird beim Abnehmen eventuell austretender Staub abgesaugt. Dadurch wird auch das Bedienungspersonal geschont. Deshalb ist vorzugsweise jedem Füllorgan eine Absaugvorrichtung zugeordnet.

Vorzugsweise wird vor dem Verschließen eines Sacks ein Kontakt- oder Kurzschlusstest durchgeführt. Dazu ist in einer Weiterbildung der Vorrichtung bzw. der Verschließeinrichtung die Ultraschallschweißeinrichtung mit einer Überwachungseinrichtung ausgestattet, um festzustellen, ob vor dem Aktivieren der Verschließeinrichtung der Ventilbereich des Sacks zwischen dem Amboss und der Sonotrode steht. Dies erfolgt durch eine sogenannte Kontakt- bzw. Kurzschlußüberwachung, wobei ein Kontakt ausgelöst bzw. ein Kurzschluss erzeugt wird, wenn kein Sack vorhanden ist. Bei dem entsprechenden Verfahren erfolgt eine Aktivierung des Schwinggebildes nicht ohne vorhandenen Sack.

Das bietet erhebliche Vorteile, da mit den in Rede stehenden Füllmaschinen auch solche Produkte abgefüllt werden, bei denen die Gefahr besteht, dass sich ein zündfähiges Gemisch bildet. Durch eine solche Kontakt- oder Kurzschlußüberwachung werden die Sicherheitsmaßnahmen zur Vermeidung einer Explosion erheblich erhöht.

Weiterhin kann auch noch eine Kontrolleinrichtung vorgesehen sein, die feststellt, ob ein Sack fehlt. Dann wird ein Signal in die Steuerung eingespeist, so dass der Verschließvorgang nicht ausgelöst wird. Die Kontrolleinrichtung kann auch als Ambosswächter bezeichnet werden. Die Kontrolleinrichtung kann beispielsweise aus zwei an gegenüberliegenden Seiten des Amboss angeordneten Drähten aus einem elektrisch leitfähigen Material bestehen, so dass über Änderungen des Widerstandes abgeleitet werden kann, ob ein zu verschließender Sack vorhanden ist oder nicht. Bei dem entsprechenden Verfahren wird nur der Ambosswächter abgefragt, bevor eine Aktivierung des Schwinggebildes erfolgt.

Weiterhin kann eine Überprüfung der Kontrolleinrichtung selbst vorgesehen sein, die beispielsweise durch einen Bruch des Leiters bzw. des Drahtes defekt sein kann. Es ist deshalb zur weiteren Sicherheit noch vorgesehen, dass jede Verschließeinrichtung mit einer Funktionskontrolleinrichtung derart ausgestattet ist, die nach einer bestimmten Anzahl von Verschließvorgängen eine Funktionsüberprüfung der Kontrolleinrichtung durchgeführt wird. Dies erfolgt vorzugsweise in der Form, dass der Amboss in seine Betriebsstellung bzw. in seine Verschließstellung gefahren wird, ohne dass ein Sack zwischen dem Amboss und der Sonotrode liegt. Es dürfte dann kein Verschließvorgang ausgelöst werden.

In bevorzugten Weiterbildungen wird ein Kennwert für das Schwingungsverhalten im Leerlauf nach dem Verschließen einer vorbestimmten Anzahl von Säcken ermittelt wird.

Diese Weiterbildung ist vorteilhaft, da nicht nach jedem Schwingvorgang das Schwingungsverhalten überprüft wird, sondern erst nach einer gewissen Anzahl an Schwingvorgängen. Dadurch kann der Zeitaufwand zur Überprüfung im Leerlauf eingespart werden. Typischerweise liegt die Schweißdauer zwischen etwa 0,1 und 0,8 Sekunden, in einem konkreten Beispiel beträgt sie 0,4 Sekunden. Eine solche Zeitdauer kann näherungsweise auch für die Ermittlung des Kennwerts im Leerlauf angesetzt werden. Wenn nun nicht nach jedem Sack eine Überprüfung statt findet, kann insgesamt Zeit eingespart werden. Bevorzugt ist die Überprüfung nach jedem zweiten, dritten, vierten, fünften, sechsten, siebten, achten, neunten oder zehnten Sack oder in sonstigen regelmäßigen oder zufälligen Abständen.

Durch eine in gewissen Abständen erfolgende Überprüfung kann eine hohe Sicherheit erreicht werden. Der Überprüfungsabstand kann in Weiterbildungen manuell oder automatisch eingestellt werden, z.B. in Abhängigkeit von dem zu füllenden Material.

Vorzugsweise wird ein Maß für das Schwingungsverhalten des Schwinggebildes während des Füllens eines Sacks ermittelt. Eine Überprüfung des Schwingungsverhaltens des Schwinggebildes während des Verschließens eines Sacks erfolgt zusätzlich zur Überprüfung während des Leerlaufs. Eine solche Überprüfung erfolgt vorzugsweise während des Verschweißens jedes Sacks, kann aber auch nur in regel- oder unregelmäßigen Abständen erfolgen.

Die Ermittlung des Maßes für das Schwingungsverhalten beim Verschweißen selbst liefert an sich allein zwar nicht verlässliche Werte, da z.B. die Beschaffenheit des zu verschweißenden Sacks das Schwingungsverhalten beeinflusst. Strukturveränderungen in dem Schwingungsgebilde bewirken aber auch eine Veränderung des Schwingungsverhaltens. Allerdings kann durch eventuell zwischen den zu verschweißenden Schichten vorhandene Staubkörner oder sonstige Partikel das Schwingungsverhalten auch in erheblichem Maße beeinflusst werden. Ein verändertes Schwingungsverhalten des Schwinggebildes beim Verschweißen kann deshalb gegebenenfalls auch auf Produktpartikel oder sonstige Unreinheiten im Schweißspalt zurückzuführen sein. Deshalb ist ein verändertes Maß des Schwingungsverhaltens beim Verschweißen selbst nur ein Indiz und noch kein sicherer Beweis für eine veränderte Schwingeinheit. Eine Auffälligkeit beim Verschweißen stellt aber ein vernünftiges Kriterium dar, um gegebenenfalls weitere Untersuchungen durchzuführen. Deshalb wird vorzugsweise spätestens bei Auffälligkeiten beim Verschweißen anschließend wenigstens ein Test im Leerlauf durchgeführt.

In bevorzugten Weiterbildungen des Verfahrens wird ein Kennwert für das Schwingungsverhalten im Leerlauf insbesondere genau dann ermittelt, wenn das während des Verschließens eines Sacks ermittelte Maß für das Schwingungsverhalten eine vorbestimmte Abweichung vom Normalmaß überschreitet. Es ist bevorzugt, wenn in regelmäßigen Abständen ein Kennwert für das Schwingungsverhalten im Leerlauf ermittelt wird und zusätzlich genau dann, wenn das während des Verschließens eines Sacks ermittelte Maß für das Schwingungsverhalten von dem Normalmaß um einen vorbestimmten Wert abweicht.

Eine solche Abweichung ist ein Indiz für eine strukturelle Veränderung der Sonotrode. Die Abweichung kann auch andere Ursachen haben, wie es zuvor beschrieben wurde, aber eine Abweichung tritt insbesondere auch auf, wenn die Sonotrode geschädigt ist und z.B. Gefügeänderungen aufweist. Wenn nach einem solchen abweichenden Maß eine Ermittlung des Kennwerts im Leerlauf durchgeführt wird, kann sofort überprüft werden, ob Veränderungen an der Sonotrode ursächlich waren oder nicht.

In allen zuvor beschriebenen Ausgestaltungen ist das Verfahren insbesondere dafür vorgesehen, Säcke mit entzündungsfähigem und insofern auch explosionsfähigen Materialien zu füllen. Das Verfahren kann insbesondere mit entzündbaren und schüttbaren Materialien oder Stäuben durchgeführt werden.

Mögliche und bevorzugte Materialien sind insbesondere organische Stoffe im allgemeinen, wie z.B. Mehl oder Stärkepulver oder dergleichen oder Kohle oder Graphit oder Zwei-Komponenten-Produkte. Auch die Verarbeitung von Mineralien oder von Baustoffen oder von Zement ist möglich. Die Produkte liegen dabei in der Regel als schüttfähiges Gut in Pulverform oder Granulatform vor.

Gemische aus Luft und brennbaren organischen oder anorganischen Stäuben wie z.B. Kohle-, Mehl-, Holz-, Kakao-, Kaffee-, Stärke-, Aluminium- oder Zellulosestaub sind unter bestimmten Umständen explosionsfähig.

Während zur Herbeiführung einer Gasexplosion lediglich das Gas-Sauerstoff-Verhältnis im zündfähigen Bereich liegen und die Zündquelle die stoffabhängige Mindestzündenergie bei der Zündtemperatur liefern muss, müssen zur Herbeiführung einer Staubexplosion weitere Rahmenbedingungen eingehalten werden: Der Staub muss fein verteilt und brennbar sein, außerdem muss die Größe der Staubpartikel unter der stoffabhängigen Maximalgröße liegen. Das kann hier bei der Abfüllung solcher Stoffe in Säcke erfüllt sein.

Ein weiteres entscheidendes Kriterium für die Zündfähigkeit ist der Sauerstoffanteil in der Luft. Als Zündquelle können verschiedene elektrische oder mechanische Effekte mit ausreichender Temperatur und Energiedichte dienen, so kann insbesondere ein von der Sonotrode ausgehender Funke unter Umständen für die Zündung ausreichen.

Beim Verarbeiten und beim Füllen von explosionsfähigen Materialien in Säcke sind deshalb strenge Sicherheitsanforderungen einzuhalten. Neben einer ausreichenden Luftabfuhr, um den Staubanteil in der Luft gering zu halten, muss Funkenbildung vermieden werden, wie sie z.B. an Rissen im Sonotrodenmaterial entstehen können. Zur Vermeidung von Gefahren bei der Verarbeitung von explosionsfähigen Stoffen leistet die Erfindung einen erheblichen Beitrag, da das Entstehen eines Zündfunkens an der Sonotrode vermieden wird, so dass ein weiterer Beitrag zur Steigerung der Sicherheit geleistet wird.

Zur Ermittlung des Kennwerts des Schwingungsverhaltens im Leerlauf und/oder zur Ermittlung des des Maßes des Schweingungsverhaltens während des Verschweißens des Schwinggebildes wird vorzugsweise wenigstens ein Messwert, insbesondere eine Mehrzahl an Messwerten aufgenommen.

In vorteilhaften Weiterbildungen wird wenigstens ein Messwert für das Schwingungsverhalten anhand wenigstens eines elektrischen Messwerts abgeleitet. Vorzugsweise ist ein Sensor vorgesehen, der die aktuellen elektrischen Daten des Schwinggebildes im Leerlauf und gegebenenfalls zusätzlich beim Verschweißen eines Sacks detektiert.

Insbesondere wird der wenigstens eine Messwert für das Schwingungsverhalten aus der Leistungsaufnahme und/oder Energieaufnahme des Schwinggebildes und/oder aus dem Strom- oder Spannungsverlauf und/oder der Phase und/oder der Frequenz abgeleitet. Dazu ist vorzugsweise ein Sensor vorgesehen, der z.B. die aktuelle Leistungsaufnahme des Schwinggebildes bzw. eine der anderen Größen im Leerlauf und/oder beim Verschweißen eines Sacks detektiert.

Es kann zur Auswertung z.B. die maximale Spannung oder der maximale Strom herangezogen werden, die bzw. der während eines Leerlaufbetriebs, d.h. während des Betriebs ohne Last, also beim freien Schwingen der Sonotrode, ermittelt wird. Gleichermaßen kann zur Ermittlung des Maßes für das Schwingungsverhalten beim Verschließen die maximale Spannung oder der maximale Strom herangezogen werden. Möglich ist auch, dass zur Auswertung durchschnittliche Werte oder über der Zeit integrierte Werte berücksichtigt werden. Insbesondere kann der Messwert für das Schwingungsverhalten auch aus der Energieaufnahme abgeleitet werden. Möglich ist auch die Bestimmung des elektrischen Widerstands der Sonotrode, der sich bei Strukturänderungen verändern kann. Insbesondere ist auch die Auswertung der Phase, der Frequenz und/oder der Amplitude der Schwingung oder der elektrischen Spannung oder des elektrischen Stroms, sowie der Leistung möglich und bevorzugt.

Die Berücksichtigung der Leistung oder der Energie zur Auswertung sind vorteilhaft, da bei Gefügeänderungen in der Sonotrode die Resonanzfrequenz nicht mehr zum Schwinggebilde passt und damit der Energiebedarf steigt, um die Sonotrode nach der vorgesehenen Frequenz schwingen zu lassen. Deshalb sind Strukturänderungen und dergleichen gut detektierbar.

In allen Ausgestaltungen des Verfahrens ist es bevorzugt, die Messwerte mit Kalibrierwerten zu vergleichen.

Vorzugsweise wird bei einer erheblichen Abweichung ein Alarmsignal ausgegeben. Insbesondere wird bei Überschreiten einer vorbestimmten Abweichung ein Alarmsignal ausgegeben.

Die erfindungsgemäße Vorrichtung ist insbesondere als Füllmaschine zum Füllen von Säcken ausgebildet und dient insbesondere zum Füllen von Ventilsäcken. Die Füllmaschine umfasst wenigstens ein Füllorgan zum Befüllen der Säcke und weinigstens eine Ultraschallschweißeinrichtung zum Verschließen der Säcke. Die Ultraschallschweißeinrichtung weist wenigstens ein Schwinggebilde auf. Wenigstens eine Sensoreinrichtung ist vorgesehen. Die Vorrichtung ist mit einer Steuereinrichtung steuerbar und die Steuereinrichtung ist derart strukturiert, dass mittels der Steuereinrichtung und der Sensoreinrichtung ein Kennwert für das Schwingungsverhalten des Schwinggebildes im Leerlauf bestimmbar ist.

Das Füllorgan kann z.B. als Füllrohr ausgebildet sein und eine Füllturbine zum Füllen der Ventilsäcke umfassen, oder es ist eine Füllöffnung als Füllorgan vorgesehen, um den Sack von z.B. oben zu befüllen.

Das Schwinggebilde weist wenigstens eine Sonotrode auf. Insbesondere umfasst das Schwinggebilde einen Konverter zur Umwandlung der - im allgemeinen - elektrischen Schwingungen in mechanische Schwingungen. Weiterhin ist vorzugsweise wenigstens eine Einrichtung zur Amplitudentransformation und wenigstens eine Sonotrode vorgesehen.

Die Ultraschallschweißeinrichtung besteht vorzugsweise im Wesentlichen aus den Baugruppen Generator, Amboss und Sonotrode.

Die Sonotrode besteht wenigstens teilweise aus Titan. Insbesondere ist die Sonotrode bzw. es sind alle Sonotroden wenigstens teilweise und insbesondere im Wesentlichen vollständig aus Titan oder einer Titanlegierung, wie sie auch im Flugzeugbau verwendet wird. Sonotroden aus Titan bieten erhebliche Vorteile. So ist mit Titansonotroden eine besonders hohe Schwingungsamplitude möglich, die z.B. im Bereich von bis zu 70 µm oder noch mehr liegt. Konventionelle Sonotroden aus einem normalen Stahl verkraften hingegen dauerhaft nur Amplituden von 30 oder 40 µm.

Das Gewicht des Schwinggebildes beträgt vorzugsweise zwischen 3 kg und 7 kg, insbesondere etwa 5 kg.

Zur Bestimmung der Daten, wie z.B. der Frequenz und/oder Amplitude oder der elektrischen Daten wie Leistung und/oder Energie und/oder Spannung und/oder Strom und/oder Phasenlage und dergleichen ist vorzugsweise wenigstens ein elektrischer Auswertesensor vorgesehen.

Für einen ordnungsgemäßen Betrieb ist die Funktionsfähigkeit der Absaugeinrichtung erforderlich. Es ist deshalb vorzugsweise vorgesehen, dass die Absaugeinrichtung und die Ultraschallschweißeinrichtung mittels unabhängig voneinander arbeitenden Kontrolleinrichtungen prüfbar sind.

Die Kontrolleinrichtung für die Absaugvorrichtung enthält Strömungssensoren, die beispielsweise die Strömungsgeschwindigkeit der Luft prüfen. Wird diese Mindestgeschwindigkeit unterschritten oder wird ein Aderbruch festgestellt, wird über die Auswerteelektronik eine entsprechende Maßnahme eingeleitet. Vorteilhaft ist, wenn diese Fehler optisch angezeigt werden.

Der Strömungswächter bzw. die Strömungswächter sollten angrenzend an den Bereich der Verschließeinrichtung montierbar sein.

Es kann zweckmäßig sein, wenn die Sonotrode nur über eine bestimmte Zeit aktiviert ist. Es ist deshalb vorgesehen, dass beim Überschreiten einer vorgegebenen Zeit die Aktivierung der Sonotrode über ein Zeitschaltgerät, vorzugsweise über ein Zeitrelais abgeschaltet wird. Dadurch wird verhindert, dass es zu einer nicht mehr vertretbaren Wärmeentwicklung kommt.

Weitere Vorteile und Anwendungsmöglichkeiten ergeben sich aus dem Ausführungsbeispiel, das nun im Folgenden mit Bezug auf die Figuren beschrieben wird.

Darin zeigen:
- Fig. 1: eine stark schematische Darstellung der Ultraschallschweißeinrichtung,
- Fig. 2: den zeitlichen Verlauf der von der Auswerteelektronik gelieferten Spannung bei einer funktionstüchtigen und einer geschädigten Sonotrode, und
- Fig. 3: die Absaugeinrichtung.

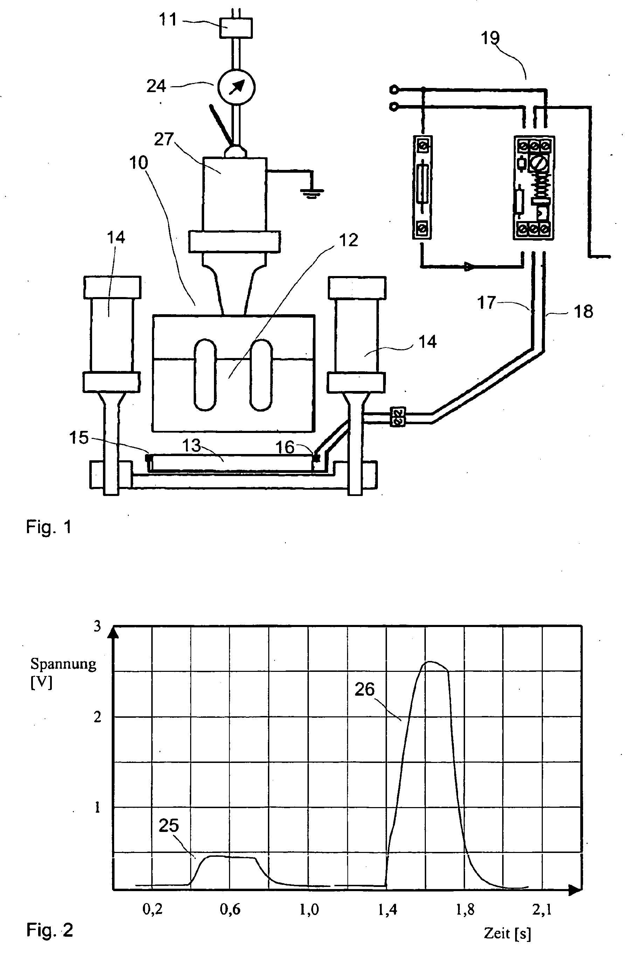

In Fig. 1 ist eine stark schematische Ansicht der Ultraschallschweißeinrichtung 10 dargestellt, die über Ultraschallschwingungen des Schwinggebildes einen befüllten Sack verschweißt.

Die Ultraschallschweißeinrichtung 10 enthält einen Generator 11, eine ortsfeste Sonotrode 12 sowie einen an die Sonotrode 12 anstellbaren Amboss 13, der sinngemäß ein Widerlager bildet.

Die Funktionsweise der Verschließeinrichtung wird im folgenden beschrieben. Zum Verschließen der Ventile der gefüllten Ventilsäcke werden die Ventilbereiche in den Spalt zwischen der Sonotrode 12 und den Amboss 13 gebracht. Der Amboss 13 wird durch zwei Kolben-Zylinder-Einheiten 14 verfahren, wobei zum Verschließen der Ventile der entsprechende Bereich des Ventilsacks eingeklemmt wird.

Fehlt ein Sack, beispielsweise weil er während des Füllvorganges geplatzt ist, erhält der Amboss 13 direkten Kontakt mit der Sonotrode 13, so dass durch den elektronischen Kontakt dies als Signal gewertet wird, dass kein Schweißvorgang ausgelöst werden soll.

Zusätzlich ist jedoch die Verschließeinrichtung noch mit einer weiteren Kontrolleinrichtung ausgestattet, die im dargestellten Ausführungsbeispiel im wesentlichen aus zwei Drähten 15, 16 mit entsprechender Auswertung in der Steuereinrichtung 19 besteht. Die Drähte 15, 16 sind seitlich am Amboss 13 verlegt. Diese Drähte 15, 16 stehen über zwei Leiter 17, 18 aus einem elektrisch leitfähigen Material mit einer Spannungsquelle in Verbindung. Die Leiter 17, 18 sind mit einem Auswertegerät 19 verbunden, welches Teil der Steuerung sein kann, so dass der Amboss 13 nicht in Richtung zur Sonotrode 12 verfahren wird, wenn durch ein entsprechendes Signal festgestellt wird, dass kein Ventilsack in den Spalt eingebracht wurde.

Bei der Füllmaschine findet also eine zweifache Kontrolle statt, ob ein Sack angelegt wurde oder nicht. Außerdem wird die Funktionsfähigkeit der Sonotrode erfindungsgemäß regelmäßig im Leerlauf überprüft. Dadurch wird die Sicherheit gegen Entzünden eines zündfähigen Gemisches ganz wesentlich erhöht, wobei gleichzeitig versucht wird, die Entstehung eines zündfähigen Gemisches zu verhindern.

Die Erzeugung der Ultraschallfrequenz erfolgt hier mit den folgenden Schritten, kann aber auch über andere Maßnahmen durchgeführt werden:
- Zunächst wird die vorhandene Wechselspannung gleichgerichtet.
- Anschließend wird die Gleichspannung mit der Zielfrequenz einer entsprechenden Frequenz von 20 kHz oder auch 35 kHz zerhackt.
- Das resultierende Signal wird mit einem Sinuswandler umgewandelt.
- Im Konverter wird über piezoelektrische Elemente eine Amplitude zwischen etwa 4 µm und 15 µm erzeugt, die durch den Resonator verstärkt wird.

Das hier eingesetzte Ultraschallschweißen ist insbesondere ein Verfahren zum Fügen von Kunststoffen, es könnten aber auch Metalle geschweißt werden. Wie bei allen anderen Schweißverfahren, muss an der Schweißstelle das Material durch zuführen von Wärme aufgeschmolzen werden. Beim Ultraschallschweißen wird sie durch eine hochfrequente mechanische Schwingung erzeugt. Die zum Schweißen notwendige Wärme wird zwischen den zu verschweißenden Flächen des Sackventils durch Molekular- und Grenzflächenreibung in den Flächen des Sackventils erzeugt. Das Ultraschallschweißen gehört zur Gruppe des Reibschweißens.

Die zum Betrieb benötigte elektrische Leistung wird über eine Anschlussleitung dem Generator 11 zugeführt, der hier im Ausführungsbeispiel aus der Wechselspannung den benötigten hochfrequenten Wechselstrom mit 20 oder auch 35 kHz erzeugt. In anderen Ausgestaltungen kann die Erzeugung des hochfrequenten Signals auch in der Steuereinrichtung 19 erfolgen, die dann mit der Schwingeinheit verbunden ist.

In der Zuleitung ist hier ein Auswertesensor 24 angeordnet, der die vom Generator aufgenommene Spannung über der Zeit detektiert. In anderen Ausgestaltungen kann zusätzlich dazu oder anstatt dessen auch ein Stromstärkesensor und/oder ein Leistungssensor und/oder ein Energiesensor und/oder Phasen- und/oder Frequenzsensor vorgesehen sein.

Mittels des Sensors 24 wird die vom Generator aufgenommene Leistung während eines Leerlaufs ohne Last ermittelt. Dazu wird ohne Sack in der Grundstellung der Sonotrode die Sonotrode zum Schwingen angeregt und die dazu erforderliche Leistung ermittelt.

Der Vergleich der aktuellen Messdaten der unbelasteten Sonotrode erfolgt mit Vorgabewerten, d.h. mit Messwerten einer unbelasteten Sonotrode gleichen Typs im Neuzustand oder auch mit Werten aus der Werksvorgabe. Es ist auch möglich für jede Sonotrode eine erste Messung nach Einbau vorzunehmen, deren Werte dann als Vorgabewerte dienen.

Ergeben sich Abweichungen in einem über das normale Maß hinausgehenden Umfang, so wird ein optisches, akustisches oder sonstiges Warnsignal ausgegeben. Wenn die Abweichung einen vorbestimmten Grenzwert übersteigt, wird das weitere Befüllen mit Säcken gestoppt, da dann eine hohe Wahrscheinlichkeit dafür vorliegt, dass eine strukturelle Störung der Sonotrode, z.B. durch Rissbildung vorliegt. An den Rissflanken größerer Risse könnten beim Schweißen - auch durch die erhöhte Reibung bedingt - lokal Temperaturen größer 1000 °C auftreten.

Das erfindungsgemäße Verfahren erlaubt hingegen ein Schweißen mit garantiert voll funktionstüchtiger Sonotrode bei jedem Schweißvorgang. Änderungen im Schwingverhalten können nach jedem Schweißvorgang erkannt werden. Daraufhin erfolgt eine Freigabe oder Sperre für die nächste Schweißung.

In Fig. 2 sind die Spannungsverläufe zweier Sonotroden über der Zeit dargestellt. Dabei zeigt die Kurve 25 eine voll funktionsfähige Sonotrode, während die Kurve 26 eine geschädigte Sonotrode darstellt. Der Zeitraum der Erregung betrug in beiden Fällen etwa 0,4 Sekunden. Auffallend ist, dass die Auswerteelektronik bei einer geschädigten Sonotrode, Kurve 26, eine maximale Spannung von etwa 2,5 Volt liefert, während bei einer voll funktionsfähigen Sonotrode, Kurve 25, nur eine Maximalspannung von etwa 0,4 Volt ausgegeben wird. Der Spannungsunterschied beträgt etwa 2 Volt und der Faktor dazwischen beträgt ungefähr sechs, so dass geschädigte Sonotroden einfach erkannt werden können.

Über dies Vorgehen können Sonotroden, die schon leichte Defekte aufweisen, die noch nicht sichtbar sind, zuverlässig erkannt und dann aussortiert werden. Insbesondere bei der Verarbeitung von entzündbaren und explosionsfähigen Stoffen bietet die Erfindung deshalb ganz erhebliche Vorteile, da eine durch defekte Sonotroden entstehende Funkenbildung vermieden werden kann.

Bei der Abfüllung anderer Stoffe bietet die Erfindung den Vorteil, dass die Schweißnaht zuverlässiger gearbeitet wird, da lokal defekte Sonotroden ein schlechteres Schweißergebnis erzeugen.

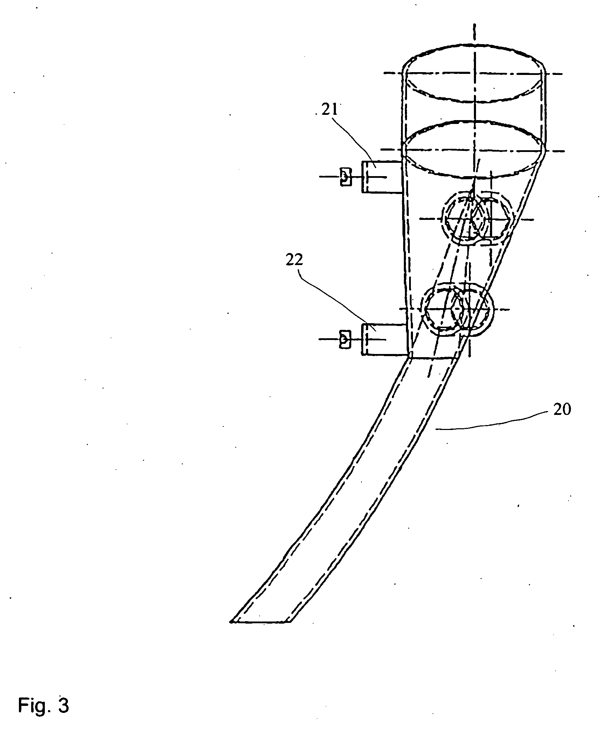

Die Figur 3 zeigt den Absaugstutzen 20, der jeder Verschließeinrichtung 10 zugeordnet ist. Der der Verschließeinrichtung 10 zugeordnete Bereich des Absaugstutzens 20 ist im Querschnitt flach gehalten. Dadurch wird eine ausreichend große Breite geschaffen, um die Umgebung der Verschließeinrichtung 10 im Wesentlichen staubfrei zu halten.

An das Flachteil schließt sich ein konisches Mittelstück und anschließend ein zylindrisches Endstück an. Der Absaugstutzen 20 ist mit einer Kontrolleinrichtung ausgestattet, um die Strömung zu überwachen. Dies kann durch zwei Strömungssensoren 21, 22 erfolgen, die am Mittelstück im Abstand zueinander installiert sind. Wird eine bestimmte Strömungsgeschwindigkeit unterschritten, wird ein Signal ausgelöst, so dass der Verschließvorgang nicht eingeleitet wird.

In der Steuereinheit ist außerdem noch ein weiterer Überwachungsbaustein installiert, der die Einschaltdauer der Sonotrode 12 auf einen vorgegebenen Wert begrenzt. Dieser Wert liegt unter 1 Sekunde. Wird dieser vorgegebene Wert überschritten, wird der Schweißvorgang abgebrochen. Auf einem Monitor der Steuereinheit werden die Fehler optisch angezeigt, damit entsprechende Maßnahmen zur Behebung des jeweiligen Fehlers eingeleitet werden können.

### Bezugszeichenliste:

- 10: Verschließeinrichtung
- 11: Generator
- 12: Sonotrode
- 13: Amboss
- 14: Kolben-Zylinder-Einheit
- 15: Draht
- 16: Draht
- 17: Leiter
- 18: Leiter
- 19: Steuereinrichtung
- 20: Absaugstutzen
- 21: Strömungssensor
- 22: Strömungssensor
- 23: Elektrische Anschlussleitung
- 24: Leistungssensor
- 25: Spannungsverlauf
- 26: Spannungsverlauf
- 27: Konverter

## Patentansprüche

1. Verfahren zum Füllen von Säcken, wobei nacheinander Säcke mit einem Füllmaterial gefüllt und anschließend mittels eines Schwinggebildes (12) einer Ultraschallschweißeinrichtung (10) verschlossen werden, wobei ein Kennwert für das Schwingungsverhalten des Schwinggebildes (12) im Leerlauf zwischen dem Verschließen zweier Säcke ermittelt wird.

2. Verfahren nach Anspruch 1, wobei vor dem Verschließen eines Sacks ein Kurzschlusstest durchgeführt wird.

3. Verfahren nach Anspruch 1 oder 2, wobei ein Kennwert für das Schwingungsverhalten im Leerlauf nach dem Verschließen einer vorbestimmten Anzahl von Säcken ermittelt wird.

4. Verfahren nach mindestens einem der vorhergehenden Ansprüche, wobei ein Maß für das Schwingungsverhalten des Schwinggebildes (12) während des Füllens eines Sacks ermittelt wird.

5. Verfahren nach Anspruch 4, wobei ein Kennwert für das Schwingungsverhalten im Leerlauf ermittelt wird, wenn das während des Verschließens eines Sacks ermittelte Maß für das Schwingungsverhalten eine Abweichung zeigt.

6. Verfahren nach mindestens einem der vorhergehenden Ansprüche zum Füllen von Säcken mit explosionsfähigen Materialien, insbesondere von entzündbaren schüttbaren Materialien oder Stäuben.

7. Verfahren nach mindestens einem der vorhergehenden Ansprüche, wobei ein Messwert für das Schwingungsverhalten anhand wenigstens eines elektrischen Messwerts abgeleitet wird.

8. Verfahren nach dem vorhergehenden Anspruch, wobei der Messwert für das Schwingungsverhalten aus der Leistungsaufnahme und/oder der Energieaufnahme des Schwinggebildes (12) abgeleitet wird.

9. Verfahren nach mindestens einem der vorhergehenden Ansprüche oder Anspruch 7 oder 8, wobei der Messwert für das Schwingungsverhalten aus der Phasenlage und/oder der Frequenz im Leerlauf abgeleitet wird.

10. Verfahren nach mindestens einem der vorhergehenden Ansprüche 7 bis 9, wobei die Messwerte mit Kalibrierwerten verglichen werden.

11. Verfahren nach mindestens einem der vorhergehenden Ansprüche, wobei bei einer erheblichen Abweichung ein Alarmsignal ausgegeben wird.

12. Verfahren nach mindestens einem der vorhergehenden Ansprüche, wobei bei Überschreiten einer vorbestimmten Abweichung ein Alarmsignal ausgegeben wird.

13. Füllmaschine zum Füllen von Säcken, insbesondere zum Füllen von Ventilsäcken, mit wenigstens einem Füllorgan zum Befüllen der Säcke und wenigstens einer Ultraschallschweißeinrichtung (10) zum Verschließen der Säcke und mit wenigstens einer Sensoreinrichtung (24) und mit einer Steuereinrichtung, wobei die Ultraschallschweißeinrichtung (10) wenigstens ein Schwinggebilde (12) aufweist und wobei die Steuereinrichtung derart strukturiert ist, dass die Steuereinrichtung mittels der Sensoreinrichtung (24) einen Kennwert für das Schwingungsverhalten des Schwinggebildes (12) im Leerlauf bestimmt.

14. Füllmaschine nach Anspruch 13, wobei das Schwinggebilde (12) wenigstens eine Sonotrode umfasst.

15. Füllmaschine nach Anspruch 13 oder 14, wobei die Sonotrode wenigstens teilweise aus Titan besteht.

16. Füllmaschine nach Anspruch 13, 14 oder 15, wobei das Schwinggebilde (12) ein Gewicht zwischen 3 kg und 7 kg, insbesondere etwa 5 kg aufweist.

17. Füllmaschine nach mindestens einem der vorhergehenden Ansprüche 13 bis 16, wobei wenigstens ein Kontaktsensor vorgesehen ist.

18. Füllmaschine nach mindestens einem der vorhergehenden Ansprüche 13 bis 17, wobei wenigstens ein Auswertesensor vorgesehen ist.

## Claims

1. A method for filling bags wherein bags are filled one by one with a filling material and thereafter closed by means of an oscillating structure (12) of an ultrasonic welding device (10), wherein a parameter for the oscillating behavior of the oscillating structure (12) is determined at no-load between closing two bags.

2. The method according to claim 1, wherein a short-circuit test is performed before the bag is closed.

3. The method according to claim 1 or 2, wherein a parameter for the oscillating behavior is determined at no-load after closing a predetermined count of bags.

4. The method according to at least one of the preceding claims, wherein a measure of the oscillating behavior of the oscillating structure (12) is determined during the filling of a bag.

5. The method according to claim 4, wherein a parameter of the oscillating behavior at no-load is determined when the measure of oscillating behavior determined during closing of a bag shows a deviation.

6. The method according to at least one of the preceding claims for filling bags with explosive materials, in particular ignitable, loose bulk materials or particulates.

7. The method according to at least one of the preceding claims, wherein a measurement value for the oscillating behavior is derived by way of at least one electric measurement value.

8. The method according to the preceding claim, wherein the measurement value for the oscillating behavior is derived from the power consumption and/or the energy consumption of the oscillating structure (12).

9. The method according to at least one of the preceding claims or claim 7 or 8, wherein the measurement value for the oscillating behavior is derived from the phase position and/or the frequency at no-load.

10. The method according to at least one of the preceding claims 7 to 9, wherein the measurement values are compared against calibration values.

11. The method according to at least one of the preceding claims, wherein in the case of a considerable deviation an alarm signal is emitted.

12. The method according to at least one of the preceding claims, wherein if a predetermined deviation is exceeded, an alarm signal is emitted.

13. A filling machine for filling bags, in particular for filling valve bags, comprising at least one filling element for filling the bags and at least one ultrasonic welding device (10) for sealing the bags, and with at least one sensor device (24) and with a control device wherein the ultrasonic welding device (10) comprises at least one oscillating structure (12) and wherein said control device is structured such that by means of the sensor device (24), the control device determines a parameter for the oscillating behavior of the oscillating structure (12) at no-load.

14. The filling machine according to claim 13, wherein the oscillating structure (12) comprises at least one sonotrode.

15. The filling machine according to claim 13 or 14, wherein the sonotrode consists of titanium at least in part.

16. The filling machine according to claim 13, 14 or 15, wherein the oscillating structure (12) has a weight between 3 kg and 7 kg, in particular approximately 5 kg.

17. The filling machine according to at least one of the preceding claims 13 to 16, wherein at least one contact sensor is provided.

18. The filling machine according to at least one of the preceding claims 13 to 17, wherein at least one evaluation sensor is provided.

## Revendications

1. Procédé de remplissage de sacs, alors que les sacs sont remplis l'un après l'autre d'un matériau de remplissage et fermés ensuite à l'aide d'un dispositif vibrant (12) d'une machine de soudage par ultrasons (10), alors qu'est mesurée, entre la fermeture de deux sacs, la valeur du comportement vibratoire du dispositif vibrant (12) au ralenti.

2. Procédé selon la revendication 1, alors qu'un test en court-circuit est exécuté avant qu'un sac ne soit fermé.

3. Procédé selon la revendication 1 ou 2, alors qu'est mesurée la valeur du comportement vibratoire au ralenti après la fermeture d'un nombre prédéfini de sacs.

4. Procédé selon au moins l'une quelconque des revendications précédentes, alors que la mesure du comportement vibratoire du dispositif vibrant (12) est prise pendant le remplissage d'un sac.

5. Procédé selon la revendication 4, alors qu'est mesurée une valeur du comportement vibratoire au ralenti quand la mesure du comportement vibratoire prise pendant la fermeture d'un sac n'est pas la même.

6. Procédé, selon au moins l'une quelconque des revendications précédentes, de remplissage de sacs avec des matériaux explosifs, en particulier avec des matériaux inflammables et en vrac ou sous forme de poussières.

7. Procédé selon au moins l'une quelconque des revendications précédentes, alors que la mesure du comportement vibratoire est dérivée au moins d'une valeur de mesure électrique.

8. Procédé selon la revendication précédente, alors que la valeur du comportement vibratoire est dérivée de l'absorption de puissance et/ou de l'absorption d'énergie du dispositif vibrant (12).

9. Procédé selon au moins l'une quelconque des revendications précédentes ou selon la revendication 7 ou 8, alors que la valeur du comportement vibratoire est dérivée de la phase d'allumage et/ou de la fréquence au ralenti.

10. Procédé selon au moins l'une quelconque des revendications précédentes de 7 à 9, alors que les valeurs mesurées sont comparées à des valeurs d'étalonnage.

11. Procédé selon au moins l'une quelconque des revendications précédentes, alors qu'un signal d'alarme retentit lorsqu'une différence de valeur trop importante est constatée.

12. Procédé selon au moins l'une quelconque des revendications précédentes, alors qu'un signal d'alarme retentit lorsqu'une certaine limite prédéfinie est dépassée.

13. Machine de remplissage pour remplir des sacs, en particulier pour remplir des sacs à valve, pourvue d'au moins une tête de remplissage pour remplir les sacs, d'au moins une machine de soudage par ultrasons (10) pour fermer les sacs et d'au moins un dispositif à capteur (24) ainsi que d'un dispositif de commande, alors que la machine de soudage par ultrasons (10) présente au moins un dispositif vibrant (12) et que le dispositif de commande est conçu de telle sorte que c'est lui qui détermine au moyen du dispositif à capteur (24) la valeur du comportement vibratoire du dispositif vibrant (12) au ralenti.

14. Machine de remplissage selon la revendication 13, alors que le dispositif vibrant (12) comprend au moins une sonotrode.

15. Machine de remplissage selon la revendication 13 ou 14, alors que la sonotrode est au moins partiellement en titane.

16. Machine de remplissage selon les revendications 13, 14 ou 15, alors que le dispositif vibrant (12) pèse entre 3 kg et 7 kg, plus particulièrement environ 5 kg.

17. Machine de remplissage selon au moins l'une quelconque des revendications précédentes 13 à 16, alors qu'est prévu au moins un capteur de contact.

18. Machine de remplissage selon au moins l'une quelconque des revendications précédentes 13 à 17, alors qu'est prévu au moins un capteur d'évaluation.
